(19) 

**Europäisches Patentamt**
**European Patent Office**
**Office européen des brevets**

(11) **EP 4 016 375 A1**

(12) **EUROPEAN PATENT APPLICATION**
published in accordance with Art. 153(4) EPC

(43) Date of publication:
**22.06.2022 Bulletin 2022/25**

(21) Application number: **19944760.8**

(22) Date of filing: **12.10.2019**

(51) International Patent Classification (IPC):
***G06K 9/00*** *(2022.01)*

(86) International application number:
**PCT/CN2019/110772**

(87) International publication number:
**WO 2021/046957 (18.03.2021 Gazette 2021/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.09.2019 CN 201910866433**

(71) Applicant: **Xiamen Wangsu Co., Ltd.**
**Xiamen, Fujian 361000 (CN)**

(72) Inventor: **LIU, Zhuolong**
**Xiamen, Fujian 361000 (CN)**

(74) Representative: **De Arpe Tejero, Manuel**
**Arpe Patentes y Marcas**
**Alcalá, 26, 5ª Planta**
**28014 Madrid (ES)**

(54) **VIDEO CLASSIFICATION METHOD, DEVICE AND SYSTEM**

(57) The present disclosure discloses a video classification method, device and system. The method includes: dividing a to-be-classified video into a plurality of video clips, and for each of the plurality of video clips, extracting a frame feature of each video frame in the video clip, and extracting an audio feature of audio data corresponding to each of the video frames; integrating the extracted frame features into a video feature of the video clip, and stitching the video feature and the audio feature into audio and video features of the video clip; and predicting a video category of the to-be-classified video according to the audio and video features of each of the plurality of video clips. The technical solutions provided by the present disclosure can improve accuracy of video classification.

FIG. 1

EP 4 016 375 A1

## Description

## TECHNICAL FIELD

The present disclosure relates to the field of Internet technology, and more particularly, to a video classification method, device and system.

## BACKGROUND

In various video services, classifying and labeling videos is a widely adopted practice. Classifying the videos not only allows users to quickly locate contents in which they are interested, but also enables various video recommendation technologies to be better implemented based on category labels of the videos.

In the past, video service providers generally classify the videos by means of manual annotation. However, with rapid increase in number of videos, increase in labor costs and development of machine learning, manual classification is gradually replaced by means of classifying the videos based on machine learning technologies.

At present, the videos may be automatically classified by a recurrent neural network (RNN), and a VLAD (Vector of Locally Aggregated Descriptors) neural network (such as netVLAD, neXtVLAD), etc. However, these machine learning methods also have certain flaws. For example, the RNN may learn a large amount of long-term information and can be configured to process data with contextual dependency. However, due to a limited length of memorable information, the RNN cannot have higher classification accuracy for longer videos. When NetVLAD and neXtVLAD classify videos, generally they process the entire video data together. However, this may ignore contextual correlation of the videos, which may lead to a problem of insufficient classification accuracy.

## SUMMARY

An objective of the present disclosure is to provide a video classification method, device and system, which can improve accuracy of video classification.

To achieve the above objective, one aspect of the present disclosure provides a video classification method. The method includes: dividing a to-be-classified video into a plurality of video clips, and for each of the plurality of video clips, extracting a frame feature of each video frame in the video clip, and extracting an audio feature of audio data corresponding to each of the video frames; integrating the extracted frame features into a video feature of the video clip, and stitching the video feature and the audio feature into audio and video features of the video clip; and predicting a video category of the to-be-classified video according to the audio and video features of each of the plurality of video clips.

To achieve the above objective, another aspect of the present disclosure also provides a video classification device, which includes a processor and a memory. The memory is configured to store a computer program, and the computer program is executable by the processor, whereby the video classification method is implemented.

To achieve the above objective, yet another aspect of the present disclosure also provides a video classification system. A to-be-classified video is divided into a plurality of video clips. The video classification system includes a first network branch, a second network branch, and a recurrent neural network (RNN). The first network branch includes a first convolutional neural network (CNN) and a VLAD (vector of locally aggregated descriptors) neural network, and the second network branch includes a second convolutional neural network. The first convolutional neural network is configured to extract, for each of the plurality of video clips, a frame feature of each video frame in the video clip. The VLAD neural network is configured to integrate the extracted frame features into a video feature of the video clip. The second convolutional neural network is configured to extract an audio feature of audio data corresponding to each of the video frames. The recurrent neural network is configured to receive audio and video features stitched from the video feature and the audio feature, and predict a video category of the to-be-classified video according to the audio and video features of each of the plurality of video clip.

As can be seen from the above, the technical solutions provided by the present disclosure can combine the VLAD neural network with the RNN, to overcome defects of the VLAD neural network and the RNN with the combined system. Specifically, when classifying videos, two network branches may be used, wherein the first network branch may be configured to process video frames in a video clip, and the second network branch may be configured to process audio data corresponding to the video clip. In the first network branch, frame features of each video frame in the video clip may be extracted by the first CNN. Subsequently, the VLAD neural network may integrate each frame feature of a video clip into a video feature of the video clip. It is to be noted that the frame feature extracted by the first CNN may be one feature vector. Because the video clip includes a plurality of video frames, each frame feature may form one feature matrix. This feature matrix may be dimension-reduced to one one-dimensional array by the VLAD neural network, such that data compression may be achieved. Subsequently, a result outputted from the VLAD neural network may be stitched with one or more audio features outputted from the second network branch, such that audio and video features of this video clip are obtained.

By means of the above-mentioned processing mode, each of the plurality of video clips may have its own audio and video features, and the audio and video features are results obtained after dimension reduction. In this way, assuming that there are L video frames in the to-be-classified video and there are N video frames in each of the plurality of video clips, L/N audio and video features may be obtained after the above-mentioned processing of the to-be-classified video, which is equivalent to greatly compressing a length of the to-be-classified video. Subsequently, by sequentially inputting the compressed audio and video features into the RNN, the contextually associated audio and video features may be analyzed by utilizing memory characteristics of the RNN. The RNN analyzes the compressed audio and video features instead of analyzing the to-be-classified video frame by frame, thus volume of data required to be memorized will be greatly reduced, which remedy the deficiency that the RNN cannot memorize excessive information. That is, classification results with a higher accuracy can be obtained.

In addition, according to the technical solutions provided by the present disclosure, not only is the video frame of the video clip analyzed, but also synchronous analysis is performed on the audio data corresponding to the video clip. In this way, the accuracy of video classification is further ensured by utilizing strong correlation between the video frame and the audio data.

**BRIEF DESCRIPTION OF THE DRAWINGS**

To describe the technical solutions of embodiments of the present disclosure more clearly, the accompanying drawings required for describing the embodiments will be briefly introduced below. Apparently, the accompanying drawings in the following description are merely some embodiments of the present disclosure. To those of ordinary skills in the art, other accompanying drawings may also be derived from these accompanying drawings without creative efforts.

FIG. 1 is a schematic structural diagram of a video classification system according to an embodiment of the present disclosure;
FIG. 2 is a schematic diagram showing steps of a video classification method according to an embodiment of the present disclosure;
FIG. 3 is a schematic diagram showing data processing by an RNN according to an embodiment of the present disclosure;
FIG. 4 is a schematic diagram showing prediction of title data according to an embodiment of the present disclosure; and
FIG. 5 is a schematic structural diagram of a video classification device according to an embodiment of the present disclosure.

**DETAILED DESCRIPTION**

To make the objectives, technical solutions and advantages of the present disclosure clearer, the embodiments of the present disclosure will be further described below in detail with reference to the accompanying drawings.

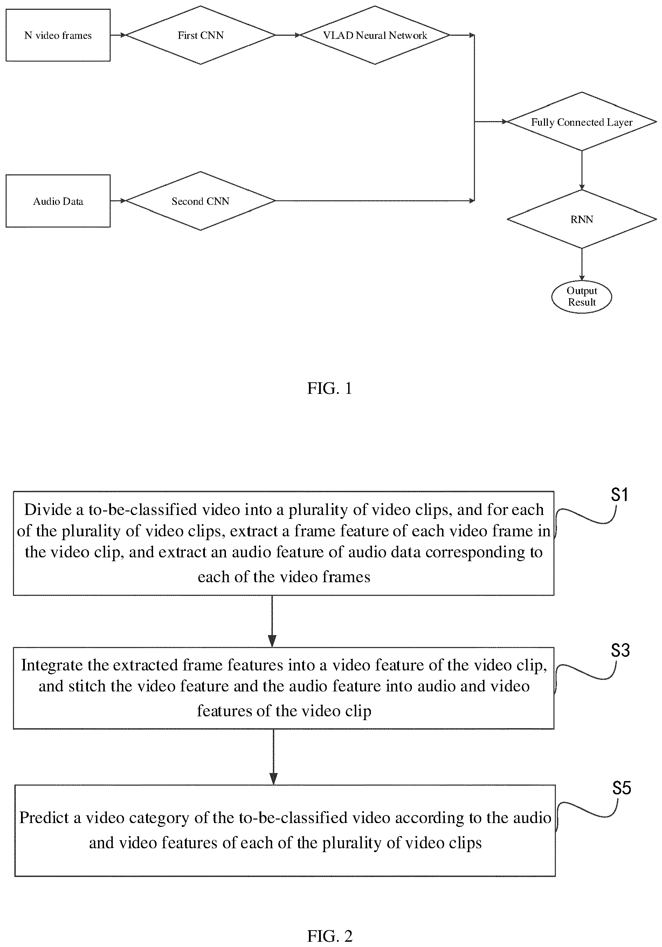

The present disclosure provides a video classification method, which may be applied to a video classification system as shown in FIG. 1. Specifically, referring to FIG. 1, the video classification system may include two network branches, wherein the first network branch may include a first CNN and a VLAD neural network, and the VLAD neural network may be, for example, netVLAD or neXtVLAD. The second network branch may include a second CNN. Results from the two network branches may be stitched and then inputted into an RNN, such that the RNN predicts a video category of a to-be-classified video.

It is to be noted that prediction of the video category by means of machine learning generally may have two phases: a training phase and a prediction phase. In the training phase and the prediction phase, processing modes of the system are similar for the to-be-classified video. However, in the training phase, an actual video category of the to-be-classified video has been known in advance by means of manual annotation. The to-be-classified video whose actual video category has been identified may be used as a training sample in the training phase. After the video classification system predicts the above to-be-classified video, the video classification system may be corrected according to a deviation between the prediction result and the actual video category, such that the corrected video classification system can more accurately perform video classification. After training of the video classification system is completed, the video classification system may proceed into the prediction phase. In the prediction phase, it is unable to know the actual video category of the inputted to-be-classified video. Instead, after training of the video classification system is completed, data of the to-be-classified video are processed, and a video category represented by a final output result is determined as the video category obtained by the prediction of the to-be-classified video.

Referring to FIG. 1 and FIG. 2, in one embodiment of the present disclosure, the above-mentioned video classification method may include following steps.

S 1: dividing a to-be-classified video into a plurality of video clips, and for each of the plurality of video clips, extracting a frame feature of each video frame in the video clip, and extracting an audio feature of audio data corresponding to each of the video frames.

In this embodiment, the to-be-classified video may be divided into a plurality of video clips in advance. When dividing the plurality of video clips, number of video frames included in each of the plurality of video clips may be determined, and the plurality of video clips are divided according to the number of video frames. For example, assuming that each of the plurality of video clips may include N video frames and the total number of frames of the to-be-classified video is L, the to-be-classified video may be divided into L/N video clips. Generally, L may be an integral multiple of N, which may ensure that each video clip includes the same number of video frames, thereby providing a unified premise for subsequent data processing. Of course, in practical applications, L may not be an integer multiple of N. In this way, in the last video clip obtained by division, the number of video frames generally may be less than N. To ensure the unity of subsequent data processing, the number of video frames in the last video clip may be expanded to N by means of video frame complement. There may be a variety of ways of video frame complement. For example, video frame interpolation may be performed on the last video clip. The number of video frames may be expanded by constructing a new video frame by means of interpolation between two adjacent video frames. For another example, the last video frame also may be copied many times until the number of video frames in the video clip reaches N.

In this embodiment, after the to-be-classified video is divided into a plurality of video clips, the same processing may be performed on each of the plurality of video clips. Specifically, the frame feature of each video frame in the video clip may be extracted by the first CNN.

In one embodiment, first, each video frame in the video clip may be converted into a corresponding bitmap image. Specifically, a pixel value of each pixel in the video frame may be detected, and the video frame may be converted into a bitmap image represented by the pixel value. Each pixel value of the bitmap image may keep consistent with an arrangement order of each pixel in the video frame.

In this embodiment, after each video frame in the video clip is converted into a bitmap image, the converted bitmap images may be inputted into the first CNN in turn, such that a feature vector of each of the bitmap images is respectively extracted by the first CNN, wherein the feature vector may serve as the frame feature of each video frame. In practical applications, the CNN may include a plurality of layer structures. For example, the CNN may include a convolutional layer, an activation function layer, a pooling layer, and a fully connected layer, etc., wherein number of each layer structure may also be more than one. The convolutional layer performs a convolution operation on each local image in the bitmap image in turn by a pre-selected convolution kernel, to obtain a convolution image comprising a convolution value. Subsequently, a value of the local image in the convolution image may be further filtered by the activation function layer and the pooling layer. Finally, the bitmap image originally represented by a matrix may be processed into a feature vector by the fully connected layer, wherein the feature vector may serve as the frame feature of the video frame extracted by the first CNN. In this way, after being processed by the first CNN, each video frame in the video clip may have its own frame feature.

Considering that a picture and a sound of the video clip generally have a strong correlation, to take advantage of this strong correlation, in this embodiment, an audio feature of audio data corresponding to the video clip may be extracted by the second CNN. Specifically, audio data corresponding to the video clip may be intercepted from the to-be-classified video, and the audio data may be converted into quantized data. In practical applications, various mathematical operations may be performed on the audio data to obtain the corresponding quantized data. For example, a frequency spectrogram or a speech spectrogram of the audio data may be obtained, and the frequency spectrogram or the speech spectrogram may be used as the quantized data of the audio data. In addition, a power spectrum density or short-time autocorrelation function of the audio data may also be calculated, and the power spectrum density or the short-time autocorrelation function may be used as the quantized data of the audio data.

In this embodiment, after the quantized data of the audio data is obtained, the quantized data may be inputted into the second CNN for processing. The second CNN may convert the quantized data in matrix form into a feature vector according to a plurality of layer structures. In this way, the feature vector extracted from the quantized data may be used as the audio feature of the audio data.

S3: integrating the extracted frame features into a video feature of the video clip, and stitching the video feature and the audio feature into audio and video features of the video clip.

If the frame feature of each video frame extracted by the first CNN is directly inputted into the RNN, when the to-be-classified video has a longer duration and when the RNN processes a more posterior frame feature, lack of a more anterior frame feature due to a limited length of memorable information may lead to inaccurate final classification results. In view of this, in this embodiment, after the frame feature of each video frame of the video clip is obtained by the first CNN, each of these frame features may be integrated into a video feature of the video clip the VLAD neural network. In this way, the same video clip may correspond to one video feature instead of a plurality of frame features. By means of such a processing mode, assuming that the to-be-classified video has a total of L video frames and each of the L video clips has N video frames, the number of feature data to be processed may be reduced from L to L/N.

In this embodiment, the VLAD neural network may include netVLAD or neXtVLAD, which may be flexibly selected according to the number of data needs to be processed in practical applications. The VLAD neural network may process a video clip as an integral whole to obtain one one-dimensional array of this video clip. Specifically, after being processed by the first CNN, each frame feature of the video clip may be represented by a feature vector, and one feature matrix may be constructed according to the feature vector represented by each frame feature. In this feature matrix, each row may represent one feature vector. Therefore, number of rows in this feature matrix may be consistent with the number of video frames included in the video clip. After a feature matrix is constructed, this feature matrix may be inputted into the VLAD neural network, such that this feature matrix may be processed into a one-dimensional array by utilizing characteristics of the VLAD neural network. This one-dimensional array may serve as the video feature of this video clip. In this way, the original feature matrix corresponding to each of the plurality of video clips may be dimension-reduced to one one-dimensional array by the VLAD neural network.

In this embodiment, the audio feature of the audio data processed by the second CNN is also a one-dimensional array (actually a feature vector). Therefore, to reflect correlation between a video frame and the audio data of an audio clip, the video feature and the audio feature may be stitched together to serve as an integral whole for subsequent data analysis. Specifically, two one-dimensional arrays may be stitched into a one-dimensional array, and the one-dimensional array obtained by stitching may be used as the audio and video features of the video clip. For example, assuming that the video feature of a video clip is (1, 2, 3) and the audio feature of the audio data of this video clip is (4, 5, 6), the stitched audio and video features may be (1, 2, 3, 4, 5, 6).

S5: predicting a video category of the to-be-classified video according to the audio and video features of each of the plurality of video clips.

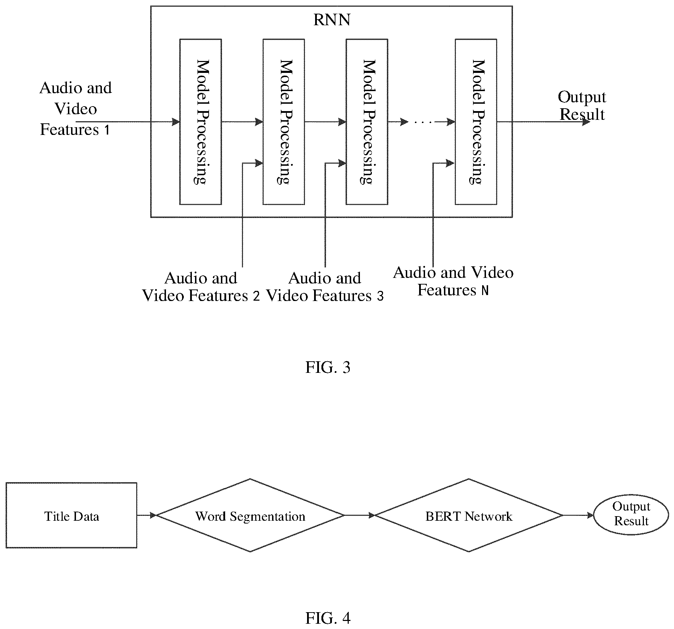

In this embodiment, each of the plurality of video clips in the to-be-classified video may be processed in the above-mentioned manner to obtain the audio and video features. Contents of each of the plurality of video clips in the to-be-classified video are contextually associated, thus each of the audio and video features of the to-be-classified video processed by the RNN may have better classification accuracy. Referring to FIG. 3, the audio and video features of each of the plurality of video clips may be sequentially inputted into the RNN model. After the audio and video features of each of the plurality of video clips are inputted, the RNN model may output the final classification result.

As shown in FIG. 3, audio and video data of each of the plurality of video clips may be sequentially inputted into the RNN model according to an order in which the plurality of video clips are played in the to-be-classified video. After the RNN model obtains a processing result of first audio and video features, the processing result of the first audio and video features may be used as auxiliary data and is processed together with second audio and video features, such that the correlation between the audio and video features may be reflected. That is, when the RNN processes the audio and video features of the current video clip, a processing result of a previous video clip may be used as auxiliary data and is processed together with the audio and video features of the current video clip to obtain the processing result of the current video clip. This processing result may be processed as auxiliary data of next audio and video features, to continue influences of former audio and video features on latter audio and video features. After the RNN has finished processing the audio and video features of each of the plurality of video clips, a video category represented by an output result from the RNN may be determined as the video category of the to-be-classified video.

Specifically, the output result from the RNN may be a probability vector, wherein each vector element in the probability vector may have different probability values, and these vector elements may correspond to different prediction results one to one. For example, when video categories currently to be determined are five categories: entertainment, travel, action, science fiction, and animation, the probability vector may have five probability values corresponding to these five categories one to one. When determining the video category of the to-be-classified video, a maximum probability value may be identified from the probability vector, and a video category corresponding to the maximum probability value may be determined as the video category obtained by prediction of the to-be-classified video.

In one embodiment, to enhance versatility of the video classification system, a fully connected layer may be added before the RNN. In this way, the audio and video features obtained by stitching may be processed by the fully connected layer and then be inputted into the RNN.

In one embodiment, to further improve the accuracy of video classification, the video category may be predicted based on title data of the to-be-classified video, and two prediction results are comprehensively compared to determine the final video category of the to-be-classified video. Referring to FIG. 4, in this embodiment, after the title data of the to-be-classified video are obtained, a lexical word with actual meanings may be extracted from the title data by means of conventional word segmentation. Next, the extracted lexical word may be inputted, as a lexical sequence, into a natural language processing (NLP) model. In practical applications, the NLP model may employ a BERT (Bidirectional Encoder Representation from Transformers) network. In the BERT network, each lexical word in the inputted lexical sequence may be converted into a corresponding word vector, and the word vector is analyzed by means of Masked Language Model (MLM) and Next Sentence Prediction (NSP) strategies, to finally determine the video category corresponding to the inputted lexical sequence.

In this embodiment, an output result from the BERT network may also be a probability vector, and this probability vector may also have a one-to-one correspondence with the video category to be determined. In this way, a first prediction result and a second prediction result may be obtained respectively based on the audio and video features and the title data. Subsequently, the final video category of the to-be-classified video may be determined according to the first prediction result and the second prediction result. Both the first prediction result and the second prediction result may be probability vectors, so a final probability vector may be calculated by means of weighted average. Specifically, respective weight coefficients may be assigned to the two probability vectors, wherein sum of the two weight coefficients may be 1. A weighted average calculating operation may be performed on the two probability vectors according to the assigned weight coefficients based on a formula as below:

$$P_c = a \cdot P_1 + (1-a)P_2$$

wherein $P_c$ represents the probability vector obtained by weighted average, $a$ represents the weight coefficient of the first prediction result, $P_1$ represents the probability vector represented by the first prediction result, and $P_2$ represents the probability vector represented by the second prediction result.

In this embodiment, after the probability vector is obtained by means of weighted average, a target vector element with a maximum probability value may be identified from the probability vectors subjected to the weighted average calculating operation, and a video category represented by the target vector element may be determined as the final video category of the to-be-classified video. In this way, based on combination of the two prediction results, the final classification result may be made more accurate.

In one embodiment, in the training phase, parameters in each neural network may be adjusted continuously by comparing the predicted results with a real result. In addition, the number of video frames included in the video clip and the aforementioned weight coefficients may also be adjusted. Specifically, when the final video category of the to-be-classified video is inconsistent with an actual video category of the to-be-classified video, the weight coefficients may be adjusted such that the final video category determined according to the adjusted weight coefficients keeps consistent with the actual video category. In addition, when the video category of the to-be-classified video is inconsistent with the actual video category of the to-be-classified video, number of video frames included in each of the plurality of video clips may be adjusted such that the video category obtained by predicting according to the adjusted number of video frames keeps consistent with the actual video category. The above-mentioned parameter adjustment processes may be carried out alternatively or simultaneously, which is not limited in the present disclosure.

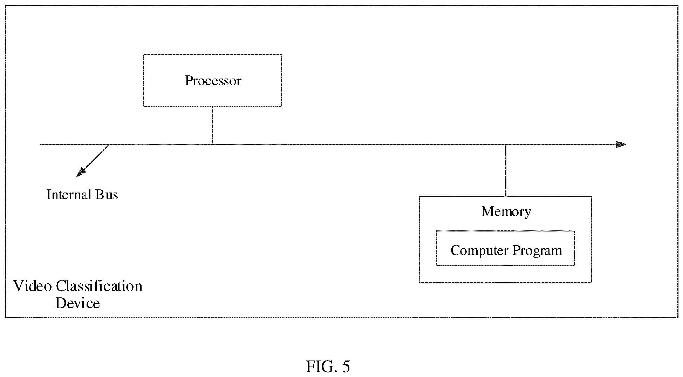

Referring to FIG. 5, the present disclosure also provides a video classification device, which includes a processor and a memory. The memory is configured to store a computer program, and the computer program is executable by the processor, whereby the above video classification method is implemented.

Referring to FIG. 1, the present disclosure also provides a video classification system. A to-be-classified video is divided into a plurality of video clips. The video classification system includes a first network branch, a second network branch, and a recurrent neural network. The first network branch includes a first convolutional neural network and a VLAD (vector of locally aggregated descriptors) neural network, and the second network branch includes a second convolutional neural network.

The first convolutional neural network is configured to extract, for each of the plurality of video clips, a frame feature of each video frame in the video clip.

The VLAD neural network is configured to integrate the extracted frame features into a video feature of the video clip.

The second convolutional neural network is configured to extract an audio feature of audio data corresponding to each of the video frames.

The recurrent neural network is configured to receive audio and video features stitched from the video feature and the audio feature, and predict a video category of the to-be-classified video according to the audio and video features of each of the plurality of video clip.

In one embodiment, the video classification system also includes a BERT (Bidirectional Encoder Representation from Transformers) network and a comprehensive prediction unit.

The BERT network is configured to predict the video category of the to-be-classified video according to title data of the to-be-classified video.

The comprehensive prediction unit is configured to determine a final video category of the to-be-classified video according to a first prediction result obtained based on the audio and video features and a second prediction result obtained based on the title data.

In one embodiment, the comprehensive prediction unit includes:

a weighted average module, configured to respectively assign a respective weight coefficient to two probability vectors, and perform a weighted average calculating operation on the two probability vectors according to the assigned weight coefficients; and
a probability value recognition module, configured to identify a target vector element with a maximum probability value from the probability vectors subjected to the weighted average calculating operation, and determine a video category represented by the target vector element as the final video category of the to-be-classified video.

As can be seen from the above, the technical solutions provided by the present disclosure can combine the VLAD neural network with the RNN, to overcome defects of the VLAD neural network and the RNN with the combined system. Specifically, when classifying videos, two network branches may be used, wherein the first network branch may be configured to process video frames in a video clip, and the second network branch may be configured to process audio data corresponding to the video clip. In the first network branch, frame features of each video frame in the video clip may be extracted by the first CNN. Subsequently, the VLAD neural network may integrate each frame feature of a video clip into a video feature of the video clip. It is to be noted that the frame feature extracted by the first CNN may be one feature vector. Because the video clip includes a plurality of video frames, each frame feature may form one feature matrix. This feature matrix may be dimension-reduced to one one-dimensional array by the VLAD neural network, such that data compression may be achieved. Subsequently, a result outputted from the VLAD neural network may be stitched with one or more audio features outputted from the second network branch, such that audio and video features of this video clip are obtained.

By means of the above-mentioned processing mode, each of the plurality of video clips may have its own audio and video features, and the audio and video features are results obtained after dimension reduction. In this way, assuming that there are L video frames in the to-be-classified video and there are N video frames in each of the plurality of video clips, L/N audio and video features may be obtained after the above-mentioned processing of the to-be-classified video, which is equivalent to greatly compressing a length of the to-be-classified video. Subsequently, by sequentially inputting the compressed audio and video features into the RNN, the contextually associated audio and video features may be analyzed by utilizing memory characteristics of the RNN. The RNN analyzes the compressed audio and video features instead of analyzing the to-be-classified video frame by frame, thus volume of data required to be memorized will be greatly reduced, which remedy the deficiency that the RNN cannot memorize excessive information. That is, classification results with a higher accuracy can be obtained.

In addition, according to the technical solutions provided by the present disclosure, not only is the video frame of the video clip analyzed, but also synchronous analysis is performed on the audio data corresponding to the video clip. In this way, the accuracy of video classification is further ensured by utilizing strong correlation between the video frame and the audio data.

The various embodiments in this specification are described in a progressive manner, and the same or similar parts between the various embodiments may be referred to each other, and each embodiment focuses on the differences from other embodiments. In particular, for the system and device embodiments, both may be explained with reference to the introduction of the foregoing method embodiments.

From the description of the foregoing embodiments, those skilled in the art may clearly know that various embodiments may be implemented by feat of software and necessary general hardware platform, or of course by means of hardware. Based on such an understanding, the foregoing technical solutions in essence or that part of contribution to the prior art may be embodied in the form of software products, which may be stored in computer-readable storage media, such as ROM/RAM, diskettes or optical disks and the like, including some instructions such that it is possible to execute embodiments or methods as recited in some parts of embodiments by a computer device (personal computers or servers, or network device, etc.).

The foregoing descriptions are merely preferred embodiments of the present disclosure, and are not intended to limit the present disclosure. Any modification, equivalent replacement and improvement made within the spirit and principle of the present disclosure shall fall into the protection scope of the present disclosure.

**Claims**

1. A video classification method, comprising:

   dividing a to-be-classified video into a plurality of video clips, and for each of the plurality of video clips, extracting a frame feature of each video frame in the video clip, and extracting an audio feature of audio data corresponding to each of the video frames;
   integrating the extracted frame features into a video feature of the video clip, and stitching the video feature and the audio feature into audio and video features of the video clip; and
   predicting a video category of the to-be-classified video according to the audio and video features of each of the plurality of video clips.

2. The method according to claim 1, wherein the extracting a frame feature of each video frame in the video clip comprises:

   converting each video frame in the video clip into a corresponding bitmap image; and
   extracting a feature vector of each of the bitmap images respectively, and determining each of the extracted feature vectors as the frame feature of each of the video frames.

3. The method according to claim 1 or 2, wherein the integrating the extracted frame features into a video feature of the video clip comprises:

   constructing a feature matrix according to the feature vector represented by each of the frame features, and processing the feature matrix into a one-dimensional array; and
   determining the one-dimensional array as the integrated video feature.

4. The method according to claim 1, wherein the extracting an audio feature of audio data corresponding to each of the video frames comprises:

   converting the audio data into quantized data, and extracting a feature vector of the quantized data; and

determining the feature vector of the quantized data as the audio feature of the audio data.

5. The method according to claim 1, wherein both the video feature and the audio feature are one-dimensional arrays; and the stitching the video feature and the audio feature into audio and video features of the video clip comprises:
stitching two one-dimensional arrays into a one-dimensional array, and determining the one-dimensional array obtained as the audio and video features.

6. The method according to claim 1 or 5, wherein the predicting a video category of the to-be-classified video according to the audio and video features of each of the plurality of video clips comprises:

sequentially inputting the audio and video features of each of the plurality of video clips into a recurrent neural network according to an order where the video clip is played in the to-be-classified video; wherein when the recurrent neural network processes the audio and video features of a current video clip, a processing result of a previous video clip is processed as auxiliary data together with the audio and video features of the current video clip to obtain a processing result of the current video clip; and
after the recurrent neural network processes the audio and video features of each of the plurality of video clips, determining a video category represented by an output result as the video category of the to-be-classified video.

7. The method according to claim 1, further comprising:

obtaining title data of the to-be-classified video, and predicting the video category of the to-be-classified video according to the title data; and
determining a final video category of the to-be-classified video according to a first prediction result obtained based on the audio and video features and a second prediction result obtained based on the title data.

8. The method according to claim 7, wherein the first prediction result and the second prediction result are both probability vectors; and the determining a final video category of the to-be-classified video comprises:

respectively assigning a respective weight coefficient to the two probability vectors, and performing a weighted average calculating operation on the two probability vectors according to the assigned weight coefficients; and
identifying a target vector element with a maximum probability value from the probability vectors subjected to the weighted average calculating operation, and determining a video category represented by the target vector element as the final video category of the to-be-classified video.

9. The method according to claim 8, further comprising:
when the final video category of the to-be-classified video is inconsistent with an actual video category of the to-be-classified video, adjusting the weight coefficients such that the final video category determined according to the adjusted weight coefficients keeps consistent with the actual video category.

10. The method according to claim 1, further comprising:
when the video category of the to-be-classified video is inconsistent with an actual video category of the to-be-classified video, adjusting number of video frames included in each of the plurality of video clips such that the video category obtained by predicting according to the adjusted number of video frames keeps consistent with the actual video category.

11. A video classification device, comprising a processor and a memory, wherein the memory is configured to store a computer program, and the computer program is executable by the processor, whereby the method according to any one of claims 1 to 10 is implemented.

12. A video classification system, wherein a to-be-classified video is divided into a plurality of video clips, the video classification system comprises a first network branch, a second network branch and a recurrent neural network, the first network branch comprising a first convolutional neural network and a VLAD (vector of locally aggregated descriptors) neural network, and the second network branch comprising a second convolutional neural network, wherein:

the first convolutional neural network is configured to extract, for each of the plurality of video clips, a frame feature of each video frame in the video clip;
the VLAD neural network is configured to integrate each of the extracted frame features into a video feature of the video clip;
the second convolutional neural network is configured to extract an audio feature of audio data corresponding to each of the video frames; and
the recurrent neural network is configured to receive audio and video features stitched from the video feature and the audio feature, and predict a video category of the to-be-classified video according to the audio and video features of each of the plurality of video clip.

13. The video classification system according to claim 12, further comprising a BERT (Bidirectional Encoder Representation from Transformers) network and a comprehensive prediction unit, wherein:

the BERT network is configured to predict the video category of the to-be-classified video according to title data of the to-be-classified video; and

the comprehensive prediction unit is configured to determine a final video category of the to-be-classified video according to a first prediction result obtained based on the audio and video features and a second prediction result obtained based on the title data.

14. The video classification system according to claim 13, wherein the comprehensive prediction unit comprises:

a weighted average module, configured to respectively assign respective weight coefficient to two probability vectors, and perform a weighted average calculating operation on the two probability vectors according to the assigned weight coefficients; and

a probability value recognition module, configured to identify a target vector element with a maximum probability value from the probability vectors subjected to the weighted average calculating operation, and determine a video category represented by the target vector element as the final video category of the to-be-classified video.

| N video frames | → | First CNN | → | VLAD Neural Network | → |

| Audio Data | → | Second CNN | → |

Fully Connected Layer

↓

RNN

↓

Output Result

FIG. 1

| Divide a to-be-classified video into a plurality of video clips, and for each of the plurality of video clips, extract a frame feature of each video frame in the video clip, and extract an audio feature of audio data corresponding to each of the video frames | S1 |

↓

| Integrate the extracted frame features into a video feature of the video clip, and stitch the video feature and the audio feature into audio and video features of the video clip | S3 |

↓

| Predict a video category of the to-be-classified video according to the audio and video features of each of the plurality of video clips | S5 |

FIG. 2

RNN

Audio and
Video
Features 1

Model Processing

Model Processing

Model Processing

· · · ·

Model Processing

Output
Result

Audio and
Video Features 2

Audio and
Video Features 3

Audio and Video
Features N

FIG. 3

Title Data → Word Segmentation → BERT Network → Output Result

FIG. 4

Processor

Internal Bus

Memory

Computer Program

Video Classification
Device

FIG. 5

## INTERNATIONAL SEARCH REPORT

| International application No. |
| --- |
| **PCT/CN2019/110772** |

**A.  CLASSIFICATION OF SUBJECT MATTER**

G06K 9/00(2006.01)i

According to International Patent Classification (IPC) or to both national classification and IPC

**B.  FIELDS SEARCHED**

Minimum documentation searched (classification system followed by classification symbols)

G06K

Documentation searched other than minimum documentation to the extent that such documents are included in the fields searched

Electronic data base consulted during the international search (name of data base and, where practicable, search terms used)

DWPI; USTXT; SIPOABS; CNABS; CNTXT; CNKI: 视频, 卷积神经网络, 片段, 时间, 音频, 分类, 局部聚合, 递归神经网络, video, CNN, convolutional neural network, segment, time, audio, classify, VLAD, RNN, recursive neural network

**C.  DOCUMENTS CONSIDERED TO BE RELEVANT**

| Category* | Citation of document, with indication, where appropriate, of the relevant passages | Relevant to claim No. |
| --- | --- | --- |
| X | CN 109992679 A (TENCENT TECHNOLOGY SHENZHEN CO., LTD.) 09 July 2019 (2019-07-09)<br>  claim1, description paragraphs 0033-0099 | 1-14 |
| A | CN 102567512 A (SANGFOR NETWORK TECHNOLOGY (SHENZHEN) CO., LTD.) 11 July 2012 (2012-07-11)<br>  entire document | 1-14 |
| A | CN 105654130 A (CHENGDU BUSINESS BIG DATA TECHNOLOGY CO., LTD.) 08 June 2016 (2016-06-08)<br>  entire document | 1-14 |
| A | US 2017344829 A1 (MICROSOFT TECHNOLOGY LICENSING LLC) 30 November 2017 (2017-11-30)<br>  entire document | 1-14 |

☐ Further documents are listed in the continuation of Box C.    ☑ See patent family annex.

| | |
| --- | --- |
| *  Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **02 June 2020** | **22 June 2020** |

| Name and mailing address of the ISA/CN | Authorized officer |
| --- | --- |
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2019/110772**

| Patent document cited in search report | | | Publication date (day/month/year) | Patent family member(s) | | | Publication date (day/month/year) |
|---|---|---|---|---|---|---|---|
| CN | 109992679 | A | 09 July 2019 | None | | | |
| CN | 102567512 | A | 11 July 2012 | CN | 102567512 | B | 17 December 2014 |
| CN | 105654130 | A | 08 June 2016 | None | | | |
| US | 2017344829 | A1 | 30 November 2017 | US | 10019629 | B2 | 10 July 2018 |

Form PCT/ISA/210 (patent family annex) (January 2015)